# FASCICULE DE BREVET EUROPEEN

(11) **EP 3 108 437 B1**
(45) Date de publication et mention de la délivrance du brevet: **06.06.2018**
(21) Numéro de dépôt: 15706921.2
(22) Date de dépôt: 13.02.2015
(51) Int. Cl.: G06Q 30/04, H02J 50/80, H02J 7/00, G06Q 50/06

(54) **DISPOSITIF D'ALIMENTATION D'UN APPAREIL ELECTRIQUE**
STROMVERSORGUNGSEINRICHTUNG FÜR EINEN ELEKTRISCHEN APPARAT
SUPPLYING DEVICE FOR AN ELECTRICAL APPARATUS

(30) Priorité: 21.02.2014 FR 1451427
(43) Date de publication de la demande: 28.12.2016
(73) Titulaire: Orange, 75015 Paris (FR)
(72) Inventeur: PUHARRE, Michel, 92320 Chatillon (FR); CHERBOURG, Fabien, 91390 Morsang Sur Orge (FR)
(86) Numéro de dépôt international: PCT/FR2015/050362
(87) Numéro de publication internationale: WO 2015/124854

(56) Documents cités:
- WO-A2-2009/012018
- US-A1- 2010 306 033

## Description

### DOMAINE TECHNIQUE AUQUEL SE RAPPORTE L'INVENTION

La présente invention concerne de manière générale le domaine des dispositifs d'alimentation d'appareils électriques, et plus précisément celui des dispositifs d'alimentation permettant l'alimentation d'appareils électriques tout en permettant la facturation de cette alimentation.

### ARRIERE-PLAN TECHNOLOGIQUE

L'accès aux prises électriques pour pouvoir recharger la batterie ou alimenter électriquement un appareil électrique est aujourd'hui bien souvent soit inexistant, soit gratuit dans les lieux publics tels que par exemple les hôtels, gares, trains, aéroports, etc.

Dans le premier cas, c'est un réel problème pour les utilisateurs qui ont besoin de recharger des appareils électriques tels que leurs smartphones, tablettes ou ordinateurs portables.

Dans l'autre cas, se pose le problème du coût de l'énergie ainsi offerte gratuitement aux utilisateurs, sans oublier le coût de maintenance des prises électriques. Il est alors nécessaire de disposer d'une méthode ou d'un dispositif pour pouvoir facturer le service de recharge de l'appareil électrique.

Cette problématique se pose par exemple pour le rechargement de véhicules électriques, et des solutions proposant des bornes de recharges à la disposition du public existent. Une telle solution est par exemple décrite dans la demande de brevet internationale PCT/EP2012/053032. Le système décrit dans cette demande de brevet permet la facturation de l'énergie électrique utilisée lors de la recharge d'un véhicule électrique. Ce système permet l'identification du véhicule à recharger et la facturation de l'opération de recharge. La solution décrite est cependant complexe, et s'appuie sur une communication standardisée entre la borne de recharge et le véhicule via par exemple un bus CAN (Controller Area Network, ISO 11898) embarqué dans le véhicule.

Une autre solution est présentée dans la demande de brevet américain US2010332308. Une telle solution permet la facturation de l'opération de recharge, le paiement pouvant être réalisé directement par le possesseur du smartphone par exemple par carte bancaire sur un terminal de paiement installé à coté de la borne de recharge. Ce système présente l'inconvénient de reposer sur l'ajout d'un terminal de paiement, ce qui alourdit considérablement le coût d'une telle installation, sans même parler des coûts de maintenance de tels terminaux de paiement.

D'autres solutions existent, permettant une identification des appareils électriques et une facturation de la recharge de ces appareils électriques, tel que par exemple, le système proposé par Sony™ « *Smart Energy Solutions* ». Cette solution ne peut toutefois pas être appliquée aux parcs d'appareils électrique existants, sauf à obliger chaque utilisateur à utiliser un câble de rechargement spécifique, par exemple intégrant une puce de type NFC utilisée pour l'identification de l'appareil électrique ou de son utilisateur.

Le document US2010/0306033 décrit un dispositif permettant l'alimentation électrique d'un appareil électrique sur réception d'un message.

On notera aussi que toutes les solutions de recharge reposant sur un rôle actif de l'appareil électrique à recharger deviennent inopérantes si la batterie de l'appareil est totalement déchargée. C'est par exemple le cas de la solution présentée dans la demande de brevet internationale PCT/EP2012/053032. Ceci est un inconvénient majeur de ces solutions.

### OBJET DE L'INVENTION

L'invention propose de remédier aux inconvénients précédemment discutés au moyen d'un dispositif permettant l'alimentation électrique d'un appareil électrique, disposant d'un module de commande à distance permettant l'activation de l'alimentation électrique de l'appareil électrique et permettant la réception de messages, le dispositif comprenant des moyens pour détecter la connexion de l'appareil électrique, la détection de la connexion déclenchant une phase d'alimentation électrique de l'appareil électrique pendant une première durée et à réception d'un message pendant la première durée, maintenir l'alimentation électrique de l'appareil électrique au delà de la première durée.

Avantageusement, il est donc possible de connecter sur ce dispositif d'alimentation électrique d'un appareil électrique totalement déchargé - c'est-à-dire dont la batterie est vide, voire un appareil électrique ne disposant pas de batterie, que ce soit là le fonctionnement normal de l'appareil électrique ou non. Ainsi, l'alimentation de cet appareil électrique pendant la première durée permet une recharge suffisante de la batterie de l'appareil électrique ou simplement son alimentation pour que l'appareil électrique puisse être utilisable par l'utilisateur. Ainsi, un processus d'activation du dispositif d'alimentation électrique, c'est-à-dire de démarrage de la fourniture d'une alimentation électrique à l'appareil électrique connecté au dispositif, reposant sur l'utilisation de ce même appareil électrique est rendu possible par la présente invention, et ce même si l'appareil électrique connecté est initialement déchargé.

Dans un même temps, l'invention permet d'éviter que des appareils électriques ne soient connectés au dispositif sans que le processus d'activation du dispositif ne soit effectué par l'utilisateur de l'appareil électrique. En effet, au delà de la première durée, à défaut d'avoir reçu un message, le dispositif coupe l'alimentation électrique de l'appareil électrique connecté.

L'invention permet donc de concilier l'utilisation d'un appareil électrique pour gérer l'activation d'un dispositif d'alimentation et le fait que ce même appareil électrique peut nécessiter d'être alimenté pour être utilisable.

Selon un mode de réalisation de la présente invention, le dispositif comprend une prise électrique femelle permettant la connexion par branchement de l'appareil électrique.

Avantageusement, afin de garantir une grande compatibilité avec les appareils électriques existants sur le marché, le dispositif permet la connexion des appareils électriques via une prise électrique femelle.

Selon un autre mode de réalisation de la présente invention, le dispositif comprend un système de transmission d'énergie sans fil permettant la connexion de l'appareil électrique par une technologie de transmission d'énergie sans fil.

Avantageusement, afin de ne pas gérer les différents cordons de charge existants sur le marché et propres à chaque appareil électrique, le dispositif permet la connexion des appareils électriques via un système de transmission d'énergie sans fil, par exemple via la technologie Qi développé par le Wireless Power Consortium.

Selon un mode de réalisation, le message reçu est un message de validation comprenant un paramètre indiquant que l'alimentation de l'appareil électrique doit être maintenue au delà de la première durée.

Avantageusement, le message de validation comprend un paramètre indiquant au dispositif qu'il ne doit pas couper l'alimentation de l'appareil électrique une fois la première durée expirée. Ainsi, le dispositif est informé que l'alimentation de l'appareil électrique connecté doit être maintenue au delà de la première durée - gratuite -, car par exemple la facturation du service peut correctement être assurée par un serveur à l'origine du message de validation.

Selon un mode de réalisation alternatif, le module de commande à distance permet la réception et l'envoi de messages et le dispositif comprend des moyens pour détecter la déconnexion de l'appareil électrique, mesurer au moins un paramètre lié à la phase d'alimentation de l'appareil électrique et envoyer un message contenant au moins le paramètre mesuré.

Avantageusement, le dispositif peut détecter la déconnexion de l'appareil électrique, indiquant que la phase d'alimentation est terminée, mesurer un paramètre lié à cette phase d'alimentation et envoyer ce paramètre à un serveur qui pourra utiliser ce paramètre pour assurer la facturation du service. Cela peut être par exemple l'énergie consommée durant la phase d'alimentation.

Selon un mode réalisation complémentaire, le paramètre mesuré est la durée de la phase d'alimentation de l'appareil électrique.

Avantageusement, afin de simplifier la facturation des utilisateurs d'un service d'alimentation reposant sur le dispositif, le paramètre mesuré est le temps de la phase d'alimentation. L'utilisateur du service peut donc être aisément facturer au temps d'utilisation du service.

Selon un autre mode de réalisation, le dispositif comprend un moyen pour, à défaut de la réception d'un message pendant la première durée, désactiver pendant une deuxième durée l'alimentation de l'appareil électrique ainsi que la détection de la connexion d'un appareil électrique.

Avantageusement, afin d'éviter qu'un utilisateur ne puisse frauder, le dispositif entre dans une phase de blocage - la détection de la connexion, et l'alimentation, d'un appareil électrique étant bloqués - à l'expiration de la première durée. Ceci permet d'éviter qu'un utilisateur ne puisse, à l'issu de la première durée, simplement déconnecter puis reconnecter un appareil électrique pour bénéficier ainsi d'une nouvelle phase d'alimentation gratuite (pendant une nouvelle première durée) sans avoir activer le dispositif. L'intérêt d'une telle méthode de fraude est fortement limité si le dispositif se bloque après une première phase d'alimentation sans activation du dispositif. On pourra avantageusement augmenter la durée de la deuxième durée à chaque cycle de phase d'alimentation sans activation afin de renforcer cet effet dissuasif.

L'invention propose aussi un système comprenant un dispositif permettant l'alimentation électrique d'un appareil électrique et un serveur. Le dispositif dispose d'un module de commande à distance permettant l'activation de l'alimentation électrique de l'appareil électrique et permettant la réception de messages en provenance du serveur. Le dispositif comprend des moyens pour détecter la connexion de l'appareil électrique, la détection de la connexion déclenchant une phase d'alimentation électrique de l'appareil électrique pendant une première durée et, à réception d'un message pendant la première durée, maintenir l'alimentation électrique de l'appareil électrique au delà de la première durée. Le serveur comprenant des moyens pour envoyer des messages au dispositif.

Selon un mode de réalisation complémentaire, l'invention propose un système où le dispositif permettant l'alimentation électrique d'un appareil électrique permet la réception de messages en provenance du serveur et l'envoi de messages à destination du serveur et le serveur comprend des moyens pour envoyer des messages au dispositif et recevoir des messages en provenance du dispositif.

Selon un mode de réalisation complémentaire, l'invention propose un système comprenant aussi un appareil électrique pouvant être connecté au dispositif pour son alimentation électrique et disposant de moyens pour envoyer des messages à destination du serveur et recevoir des messages en provenance du serveur.

Selon un mode de réalisation complémentaire, les messages échangés entre l'appareil électrique et le serveur sont de type message court.

Avantageusement, un utilisateur disposant d'un appareil électrique pouvant transmettre et recevoir des messages courts, par exemple des messages de type Short Message Service (SMS), ce qui est le cas de la quasi-totalité des téléphones portables ou smartphones, voire des tablettes, présents sur le marché, pourra utiliser un service de fourniture d'une alimentation électrique comprenant le dispositif de la présente invention. En effet, l'activation du service peut se faire via l'envoi de SMS, ce qui rend l'activation simple et compatible avec un maximum de terminaux. En particulier, cela ne rend pas obligatoire le développement puis l'installation par l'utilisateur sur l'appareil électrique, d'une quelconque application. Cela réduit donc aussi les coûts de développement d'un service implémentant la présente invention.
L'invention propose aussi un procédé permettant l'alimentation électrique d'un appareil électrique, le procédé étant exécuté par le dispositif d'alimentation électrique, le procédé comprenant les étapes de détection de la connexion d'un appareil électrique, déclenchement de l'alimentation de l'appareil électrique pendant une première durée et à réception d'un message pendant la première durée, maintien de l'alimentation électrique de l'appareil électrique au delà de la première durée.

En pratique, le procédé permettant l'alimentation électrique d'un appareil électrique selon l'invention est mis en oeuvre sous forme d'un programme d'ordinateur, ce programme étant exécuté par exemple par un processeur d'un dispositif permettant l'alimentation électrique d'un appareil électrique. Par conséquent, selon un dernier aspect la présente invention a pour objet un programme d'ordinateur comportant des instructions de programme pour la mise en oeuvre de tout ou partie des étapes d'un procédé permettant l'alimentation électrique d'un appareil électrique tel que brièvement exposé plus haut, lorsque ce programme est exécuté par un processeur.

Par ailleurs, un programme d'ordinateur selon l'invention peut utiliser n'importe quel langage de programmation, et être sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une mémoire de type ROM (Read Only Memory), par exemple un CD ROM ou une ROM de circuit microélectronique, ou encore un moyen d'enregistrement amovible tel qu'une clef USB ou un moyen d'enregistrement magnétique, tel qu'un disque dur. D'autre part, un programme ou module logiciel selon l'invention peut être en particulier téléchargé sur un réseau de type Internet. Les avantages procurés par un programme d'ordinateur, tel que brièvement défini plus haut, sont identiques ou contribuent à ceux mentionnés plus haut en relation avec le procédé permettant l'alimentation électrique d'un appareil électrique selon l'invention, et ne seront donc pas rappelés ici.

### DESCRIPTION DES FIGURES

FIG. 1A représente un dispositif permettant la connexion d'un appareil électrique en vu de son alimentation ou de sa recharge,
FIG. 1B est une représentation schématique d'un dispositif conforme à un mode de réalisation l'invention,
FIG. 2 est un organigramme illustrant la mise en oeuvre de l'invention selon un mode de réalisation,
FIG. 3 est un organigramme de l'algorithme mis en oeuvre par le dispositif d'alimentation électrique d'un appareil électrique selon un mode de réalisation de l'invention.

### DESCRIPTION DÉTAILLÉE

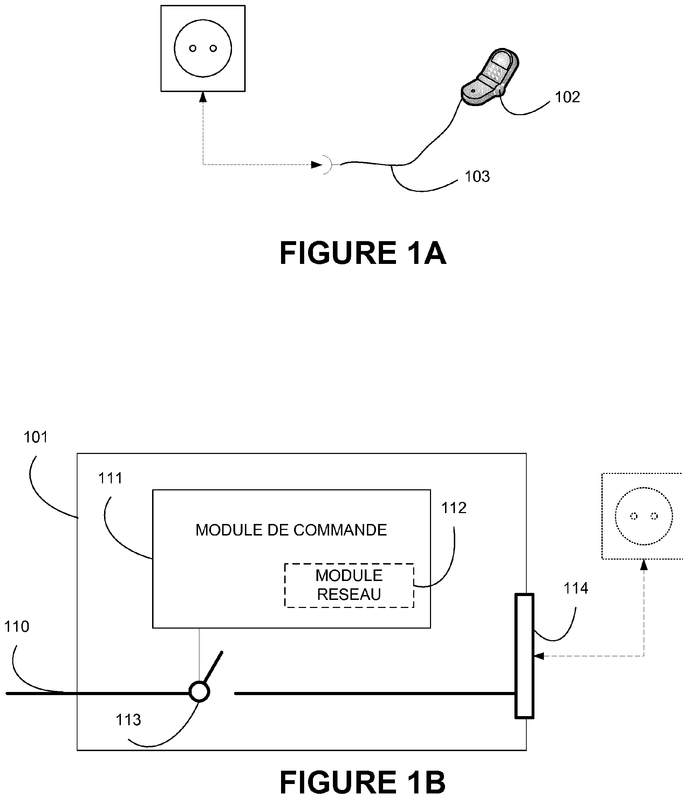

La FIG. 1A représente un dispositif d'alimentation électrique tel qu'une prise électrique femelle classiquement utilisée pour permettre la connexion d'un appareil électrique via un cordon doté d'une prise mâle. La connexion de l'appareil électrique au dispositif d'alimentation électrique se fait alors par branchement. Cette même prise électrique est reliée à une source d'énergie, typiquement le réseau électrique domestique (non représentée).

Suivant les implémentations de la présente invention, la source d'énergie utilisée peut être différente. On peut en effet considérer que la source d'énergie soit un parc de batteries, éventuellement doté d'un convertisseur de tension. On peut aussi considérer que ce même parc de batteries soit rechargé par une autre source d'énergie telle une ou plusieurs éoliennes, des panneaux solaires, ou tout autre source d'énergie que l'homme du métier peut connaitre.

On considérera dans la suite de la présente description que la source d'énergie considérée est du courant alternatif à 220 V, ce qui permet d'alimenter la quasi-totalité des appareils électriques tels que les téléphones portables ou smartphones, les tablettes ou ordinateurs personnels, sans que cela soit restrictif sur la nature de l'appareil électrique à alimenter. Par souci de simplification, on considérera qu'écrire « recharger un appareil électrique » revient à dire « recharger la batterie de l'appareil électrique ».

Ainsi, la FIG. 1A représente un smartphone 102 connecté via un cordon 103 à une prise électrique. Le cordon 103 dispose à son extrémité côté téléphone d'un connecteur lui permettant de se connecter au téléphone, et à son extrémité coté prise électrique d'une prise électrique mâle. Classiquement, un transformateur électrique est intégré à la prise mâle du cordon.

La FIG. 1B est une représentation schématique d'un dispositif 101 conforme à un mode de réalisation l'invention. Le dispositif 101 permet l'alimentation électrique d'un appareil électrique connecté via un connecteur 114.

Le dispositif 101 peut disposer d'un connecteur 114 de type prise électrique femelle, comme illustré dans les FIG. 1A et 1B, d'un connecteur 114 de type connecteur USB ou par exemple, dans le cas d'utilisation d'une technologie de transmission d'énergie sans fil, d'un connecteur 114 adapté à cette technologie.

Dans un mode de réalisation alternatif, le connecteur 114 peut comporter plusieurs connecteurs ou sous-connecteurs, chaque sous-connecteur étant avantageusement d'un type différent. Cela permet d'offrir au client une plus grande compatibilité, en proposant un sous-connecteur de type prise électrique, un autre de type USB ou mini USB, etc. Dans un mode de réalisation simple, ces sous-connecteurs sont intégrés au sein du connecteur 114 selon un montage électrique dit « en parallèle ». Dans un autre mode de réalisation, un commutateur présent sur le connecteur 114 permet à l'utilisateur d'activer un sous-connecteur du connecteur 114 selon son choix.

Le dispositif 101 dispose d'un module de commande à distance 111 (ci-après « module de commande ») permettant l'activation ou la désactivation de l'alimentation électrique de l'appareil électrique connecté via le connecteur 114. Cet activation ou désactivation de l'alimentation électrique connecté via le connecteur 114 sur le dispositif 101 peut se faire par exemple par un interrupteur 113 commandé par le module de commande 111. Dans un état fermé de cet interrupteur 113, l'alimentation électrique de l'appareil électrique est réalisée. Au contraire, dans un état ouvert de l'interrupteur 114, l'alimentation électrique est coupée. Dit autrement, dans l'état fermé de l'interrupteur 113, le dispositif 101 est dit « activé », permettant l'alimentation électrique de l'appareil électrique connecté, dans l'autre cas, le dispositif est dit « désactivé ». Seul l'état activé du dispositif 101 permet l'alimentation électrique de l'appareil électrique connecté.

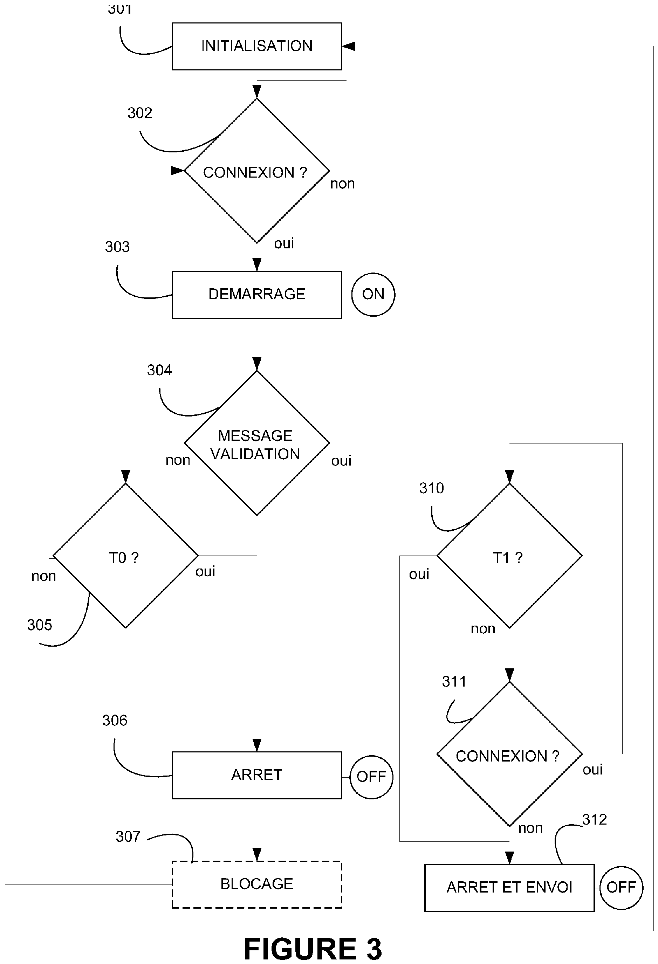

Le module de commande 111 permet également la réception et/ou l'émission de messages, via un module réseau 112. Un tel module réseau 112 peut dans un mode de réalisation être intégré dans le module de commande 111. Selon un mode de réalisation, le module de commande dispose d'un processeur permettant de piloter les différents modules du dispositif 101 : module réseau 112, interrupteur 113, etc. au moyen d'un algorithme de commande. Un tel exemple d'algorithme de commande est illustré par la FIG. 3 décrite ci-après.

Le module de commande 111 peut aussi disposer d'une zone de mémoire, non représentée dans la FIG. 1B. Cette zone de mémoire permet le stockage de données, par exemple des paramètres de configuration du dispositif d'alimentation électrique 101, mais aussi de toutes autres données nécessaires.

Le module réseau 112 peut utiliser des technologies réseau de tout type, comme par exemple un module réseau Ethernet, Wifi, GPRS, 3G, 4G, courant porteur en ligne (CPL) ou toute autre technologie réseau. Ce module réseau permet la réception et/ou l'émission de messages, par exemple de messages courts de type SMS ou de tout autre type de message suivant la technologie réseau utilisée.

Le dispositif 101 est connecté à une source d'énergie électrique via par exemple une connexion 110 au réseau électrique domestique. Dans un mode de réalisation, cette source d'énergie électrique alimente le module de commande 111 et tout autre module intégré au dispositif 101.

Selon un mode de réalisation, le module de commande 111 dispose de moyens pour mesurer des paramètres liés au fonctionnement du dispositif 101. Cela peut être par exemple un ou plusieurs paramètres liés à la phase d'alimentation de l'appareil électrique, comme la durée de la phase d'alimentation, l'énergie consommée lors de la phase d'alimentation, etc. En particulier, ces moyens de mesure peuvent être utilisés par le dispositif 101 pour détecter la connexion ou la déconnexion d'un appareil électrique, par exemple en mesurant le courant transitant par le dispositif 101.

Selon un mode de réalisation de l'invention, un identifiant est apposé à côté du dispositif 101 de manière à être visible des utilisateurs du système. Cet identifiant peut être lié à la localisation géographique du dispositif 101. Selon un mode de réalisation, l'identifiant d'un dispositif 101 est stocké dans une base de données d'un serveur et associé à une adresse réseau, telle une adresse « Internet Protocol » (IP), correspondant au module réseau 112 du module de commande 111 du dispositif 101. Cette association peut être enregistrée dans un serveur de facturation qui sera décrit plus tard.

Selon un mode de réalisation complémentaire, le dispositif 101 comporte un ou plusieurs voyants, par exemple des Light-Emitting Diode (LED), visibles d'un utilisateur, lesquels permettent d'afficher un état du dispositif 101. Ces états sont par exemple : en phase d'alimentation, alimentation coupée, problème détecté sur le dispositif 101, activation non détectée ou en cours, expiration imminente d'un délai, etc.

Selon un autre mode de réalisation complémentaire, le dispositif 101 comprend un écran visible d'un utilisateur, permettant l'affichage de messages destinés à être lus par les utilisateurs et affichant par exemple des informations sur l'état du dispositif 101.

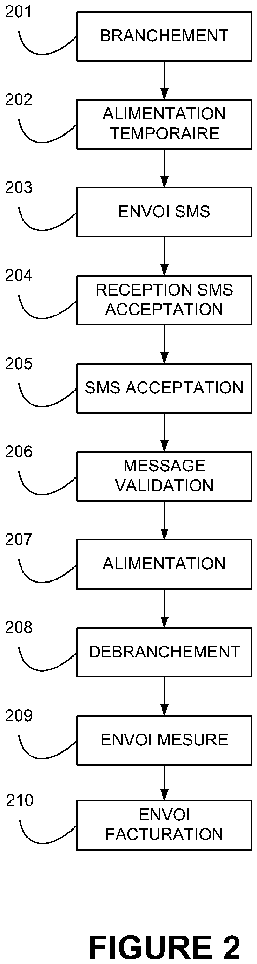

La FIG. 2 est un organigramme illustrant la mise en oeuvre de l'invention selon un mode de réalisation particulier. Cette figure décrit l'expérience utilisateur d'un service de recharge d'un appareil électrique d'un utilisateur, le service de recharge utilisant le dispositif 101.

En effet, il apparait de plus en plus que le service de recharge d'un appareil électrique est un service particulièrement valorisé par les utilisateurs d'appareils électriques tels les smartphones, qui ont une autonomie limitée. Il peut alors apparaitre judicieux pour un opérateur téléphonique de fournir ce type de service. Il devient alors important pour cet opérateur de téléphonie d'atteindre au moins deux objectifs. Tout d'abord, celui de pouvoir aisément contrôler la facturation du service. Et ensuite, il est important d'offrir ce service sans ajouter à la complexité de la facturation pour l'utilisateur final. Dit autrement, il est nécessaire de pouvoir aisément contrôler la facturation du service de recharge et d'intégrer la facturation du service de recharge au système de facturation de l'opérateur déjà connu par l'utilisateur.

Il apparait donc intéressant de proposer une solution à la fois simple et immédiatement utilisable pour l'utilisateur final, ne demandant pas de modification des appareils électriques ou achat d'équipement supplémentaire, pour être utilisée mais aussi permettant par exemple à un opérateur de téléphonie de fournir un service ayant une facturation aisément intégrable à la facturation existante afin que l'utilisateur ait une vision claire et simplifiée du service. La solution proposée utilisant le dispositif 101 comme borne de recharge permet ceci. Elle permet aussi de réduire les coûts d'une borne de recharge afin de permettre une meilleure rentabilité d'un service de facturation de recharge d'un appareil électrique alors même que l'énergie électrique consommée représente des faibles sommes.

L'appareil électrique considéré ici est typiquement un téléphone portable ou tout équipement électronique comprenant un module de téléphonie pouvant recevoir et émettre des messages, tels que par exemple des SMS. Dans cet exemple, l'appareil électrique dispose d'une batterie qu'il est proposé de recharger via le service décrit.

Le système mis en place pour offrir le service de recharge discuté ci-après comporte le dispositif 101 précédemment décrit, ainsi qu'au moins un serveur, appelé serveur de facturation.

Le serveur, selon le mode de réalisation, peut échanger des messages avec le dispositif 101 via un canal de communication compatible avec le module réseau 112 utilisé par le dispositif 101.

Dans l'exemple décrit ci-après, ce serveur peut aussi envoyer et recevoir des messages courts de type SMS, en particulier à destination et en provenance de l'appareil électrique considéré.

Selon un mode de réalisation, le serveur est par exemple exploité par un opérateur de téléphonie. Ceci a pour avantage de permettre d'intégrer la facturation du service de recharge dans la facturation des services de téléphonie déjà offert par l'opérateur.

Le serveur dispose d'une base de données permettant la facturation, la base de données comprenant en particulier des donnés permettant d'associer l'identifiant apposé sur le dispositif 101 à l'adresse réseau du module 112 de ce même dispositif 101.

Dans une première étape 201, l'utilisateur connecte l'appareil électrique sur le connecteur 114 du dispositif 101. Comme décrit dans l'étape 302 de la FIG. 3, cela déclenche la phase d'alimentation électrique permettant la recharge de la batterie de l'appareil électrique connecté.

Si l'utilisateur ne fait rien de plus, seule une phase d'alimentation électrique temporaire, pendant une première durée est disponible, ce qui correspond à l'étape 202. L'alimentation électrique de l'appareil est ensuite coupée à l'expiration de cette première durée. Afin de limiter la fraude, cette étape, selon les modes de réalisations, est suivie d'une période de blocage du dispositif 101. Ce blocage empêche en particulier l'alimentation électrique d'un appareil électrique qui serait connecté sur le dispositif 101 à l'expiration de la première durée, et ce pendant une deuxième durée. L'utilisateur ne peut donc pas bénéficier immédiatement après la première durée d'une autre phase d'alimentation électrique pendant une nouvelle première durée.

La première durée est définie dans le service proposée avec pour objectif, en cas de connexion d'un appareil déchargé, de laisser suffisamment de temps à l'appareil électrique connecté pour pouvoir recharger a minima sa batterie et ainsi pouvoir disposer des moyens d'envois et de réception de SMS nécessaires à l'activation du service.

Ainsi, dans une étape 203, lorsque l'appareil électrique est suffisamment rechargé, l'utilisateur peut l'utiliser pour envoyer un premier SMS au numéro de téléphone indiqué sur une notice apposée près du dispositif 101, ou connu de lui par un autre moyen, le premier SMS comprenant aussi l'identifiant du dispositif 101 lui aussi apposé près du dispositif 101 et relevé par l'utilisateur. Les SMS envoyés à ce numéro de téléphone sont transmis au serveur de facturation. Ce premier SMS a pour objectif de commander l'activation du dispositif 101 au delà de la première durée.

A réception de ce premier SMS, le serveur de facturation envoie à l'appareil électrique de l'utilisateur un deuxième SMS lui rappelant les conditions générales de ventes et d'utilisation du service et lui demandant une confirmation de sa demande d'activation. Ce deuxième SMS est reçu par l'appareil de l'utilisateur lors de l'étape 204.

En retour, lors de l'étape 205, l'utilisateur de l'appareil électrique envoie un troisième SMS de confirmation de la demande d'activation du dispositif 101 au serveur de facturation.

Une fois reçu le troisième SMS de confirmation, le serveur de facturation recherche dans sa base de données l'adresse réseau correspondant à l'identifiant du dispositif 101 compris dans le premier SMS de demande d'activation du dispositif. Le serveur peut envoyer un quatrième SMS à l'appareil électrique de l'utilisateur. Ce quatrième SMS indique la bonne prise en compte de la réponse et peut aussi indiquer par exemple une durée maximale autorisée de recharge de l'appareil électrique de l'utilisateur, durée correspondant à une troisième durée explicitée ci-après.

Lors de l'étape 206, le serveur, ayant retrouvé dans sa base de données l'adresse réseau du dispositif 101 correspondant à l'identifiant reçu, envoie un message de validation au dispositif 101 comprenant un paramètre indiquant que l'alimentation de l'appareil électrique doit être maintenue au delà de la première durée.

Lors de l'étape 207, le dispositif 101 ayant reçu le message de validation alimente en électricité l'appareil électrique jusqu'à la déconnexion de ce dernier ou l'expiration d'une troisième durée, comme expliqué ci-après lors de la description de l'étape 310 de la FIG.3.

Lors de l'étape 208, l'utilisateur met ensuite fin à la phase de recharge de l'appareil en déconnectant l'appareil électrique du connecteur 114. Alternativement, selon le mode de réalisation choisi, quand la troisième durée est expirée, le dispositif 101 met fin à la charge.

Lors d'une étape 209, le dispositif 101 envoie au serveur de facturation un message comprenant un paramètre indiquant que la phase d'alimentation est interrompue. Selon un mode de réalisation, ce message comprend un paramètre mesuré par le dispositif 101 lors de la phase d'alimentation électrique. Avantageusement, le paramètre mesuré correspond à la durée de la phase d'alimentation si l'objectif est de facturer le service en fonction de la durée de charge.

Le serveur de facturation, recevant ce message, est en mesure de calculer la tarification de la phase d'alimentation effectuée, et peut intégrer cette tarification à la facture téléphonique de l'utilisateur de l'appareil électrique. A noter que l'appareil électrique est identifié par son numéro d'appel lors de la réception des SMS par le serveur de facturation.

Le serveur de facturation est en mesure d'envoyer, lors d'une étape 210, un cinquième SMS récapitulatif de la facturation du service fourni à l'appareil électrique de l'utilisateur.

La FIG. 3 est un organigramme de l'algorithme mis en oeuvre par le dispositif 101 selon un mode de réalisation de l'invention.

L'algorithme présenté ci-après peut idéalement être implémenté sous la forme d'un programme d'ordinateur, lequel programme est exécuté par un processeur intégré par exemple dans le module de commande 111 du dispositif 101 permettant l'alimentation électrique d'un appareil électrique.

Lors d'une première étape 301 d'initialisation, le dispositif 101 s'initialise. Cela peut correspondre à sa mise sous tension, par exemple à la connexion du dispositif 101 à une source d'énergie, comme un réseau électrique, via le connecteur 110. Selon le mode de réalisation, le dispositif peut aussi être réinitialisé suite à la réception d'un message de réinitialisation comprenant une commande de réinitialisation. Lors de l'initialisation, le dispositif 101 peut reprendre un état par défaut, par exemple en ouvrant ou en fermant l'interrupteur 113. De même, des données stockées dans une zone mémoire du module de commande 111 peuvent être effacées ou réinitialisées à des valeurs par défaut. Par exemple des paramètres mesurés, un compteur temporel ou tout autre paramètre, peuvent être remis à zéro.

Lors de l'étape 302, le dispositif 101 détecte la connexion d'un appareil électrique. Selon le mode de réalisation, et plus précisément, selon la nature du connecteur 114, la connexion, et donc la détection de la connexion, peut se faire selon différent procédés.

Dans le cas où le connecteur 114 est de type prise électrique femelle, la détection de la connexion peut se faire par exemple lorsqu'une fiche mâle est détectée dans la prise électrique 114, ce qui nécessite que le dispositif soit doté d'un détecteur particulier pour remplir ce rôle. Alternativement, la détection peut se faire, dans l'hypothèse où l'interrupteur 113 est placé par défaut dans un état fermé, c'est-à-dire que l'alimentation est par défaut activée, par détection d'un courant de charge ou d'une variation de tension, ou de tout autre paramètre révélateur de la connexion d'un appareil électrique sur une prise. Ces méthodes sont transposables pour tout type de connecteur 114 fonctionnant sur un principe de prises complémentaires femelle/mâle, tel qu'un un connecteur 114 de type prise USB.

Dans le cas où il n'est pas détecté de connexion d'un appareil électrique, le dispositif 101 reste dans l'attente de la détection d'une connexion. L'étape 302 est une boucle d'attente de la détection d'une connexion.

Dans une étape 303, après détection de la connexion d'un appareil électrique, une phase d'alimentation électrique de l'appareil électrique est déclenchée par le dispositif 101 pendant une première durée. Selon l'état par défaut du dispositif 101, le module de commande 111 fermera l'interrupteur 113 pour déclencher cette phase d'alimentation de l'appareil électrique connecté.

La première durée peut correspondre à une durée prédéterminée, par exemple cinq minutes. Selon un autre mode de réalisation, cette première durée peut être modifiée, soit par exemple en reconfigurant le dispositif 101, ou par exemple, via un dispositif de commande intégré au dispositif 101. Cette première durée peut aussi être calculée ou adaptée en fonction de paramètres mesurés lors de la connexion de l'appareil électrique. Par exemple, en augmentant la première durée s'il est mesuré que l'appareil électrique consomme peu de courant c'est-à-dire moins qu'une certaine valeur dite « basse » prédéfinie, cette valeur pouvant être paramétrable), ou, à l'inverse, en réduisant la première durée si l'appareil électrique consomme beaucoup (c'est-à-dire plus qu'une valeur dite « haute » prédéfinie, cette valeur pouvant être paramétrable). Dans un mode de réalisation, la première durée est proportionnelle à la consommation de l'appareil électrique connecté. Dans un autre mode de réalisation, la première durée est variable, selon par exemple le moment de la journée ou un paramétrage reçu via un ou plusieurs messages.

Dans les étapes 304 et 305, le dispositif 101 maintiendra l'alimentation électrique de l'appareil connecté pendant la première durée (dite « T0 » dans la FIG. 3, étape 305), tout en vérifiant l'éventuelle réception d'un message (étape 304).

Ainsi, dans l'étape 304, à réception d'un message de validation pendant la première durée, l'alimentation électrique de l'appareil électrique est maintenue au delà de la première durée T0, et le dispositif 101 passe aux étapes 310 et 311. Ce message de validation correspond au SMS envoyé par le serveur de facturation lors de l'étape 206 de la FIG. 2.

La mesure de la première durée T0 peut être effectuée par le déclenchement d'un compte à rebours lors de l'étape 303, suite à la détection d'une connexion d'un appareil électrique. Alternativement, dans l'étape 305, le dispositif 101 peut comparer l'horodatage de l'étape 303 avec le temps courant du dispositif. Il s'agit plus précisément de comparer le résultat de la différence entre ces deux temps, définissant ainsi une première durée écoulée, avec la première durée T0, afin de déterminer si la première durée T0 est atteinte. Tant que la première durée écoulée est inférieure à la première durée T0 et qu'aucun message de validation n'est reçu, les étapes 304 et 305 se répètent en boucle.

Selon un mode de réalisation, un message reçu par le dispositif 101 permet la validation et l'activation du dispositif 101 au delà de la première durée T0. Autrement dit, un message de validation reçu pendant la première durée T0 permet de maintenir l'alimentation électrique de l'appareil électrique par le dispositif 101 au delà de cette première durée T0.

Selon un mode de réalisation complémentaire, le message reçu est un message de validation comprenant un paramètre indiquant que l'alimentation de l'appareil électrique doit être maintenue par le dispositif 101 au delà de la première durée T0.

Lors de l'étape 305, s'il s'avère que la première durée écoulée est supérieure à la première durée T0, le dispositif 101 passe à l'étape 306 puis à l'étape 307.

Lors de l'étape 306, le dispositif 101 coupe l'alimentation électrique de l'appareil électrique.

L'étape suivante 307 est une étape optionnelle. Si l'étape 307 est effectuée, le dispositif 101 désactive pendant une deuxième durée T2 l'alimentation électrique de l'appareil électrique ainsi que la détection de la connexion d'un appareil électrique. Il est bien entendu que cette étape 307 n'est effectuée qu'à défaut de la réception d'un message pendant la première durée (étape 304).

Cette étape 307 a pour objectif de réduire les cas de fraude en rendant la fraude plus compliquée ou fastidieuse. En effet, si aucun message de validation n'est reçu pendant la première durée T0 (étape 304), le dispositif 101 se bloque. Ainsi, pendant cette étape 307 de blocage, l'alimentation électrique de l'appareil électrique est coupée et il n'est plus possible, pendant la deuxième durée T2, de connecter ou reconnecter un appareil électrique au dispositif 101 afin de bénéficier d'une nouvelle phase d'alimentation électrique pendant une première durée T0. Cela empêche donc un utilisateur de bénéficier d'une succession de phase d'alimentation électrique gratuite en déconnectant puis reconnectant un appareil électrique au dispositif 101. Cela est particulièrement avantageux dans une optique de facturation d'un service d'alimentation électrique d'appareil électrique utilisant le dispositif 101 de la présente invention.

Selon un mode de réalisation complémentaire, la deuxième durée T2 peut être variable, par exemple en fonction d'un paramètre reçu dans un message de configuration. Il est aussi possible de l'augmenter - de façon continue ou non -, en fonction par exemple du nombre de phase d'alimentation qui se seraient écoulées successivement sans qu'aucun message de validation n'ait été reçu. Cela aurait pour effet de renforcer la pénibilité et de diminuer l'intérêt d'une tentative de fraude par déconnexions et reconnexions successives d'un appareil électrique au dispositif 101. Une durée prédéterminée peut ainsi être ajoutée à la deuxième durée T2, ou alors, la deuxième durée T2 peut par exemple être doublée, à chaque fois que l'étape 306 est atteinte. Selon ce mode de réalisation, un message de validation reçu lors de l'étape 304 aura alors pour effet de réinitialiser la deuxième durée T2 à sa valeur initiale.

Selon le mode de réalisation, si l'étape 307 n'est pas implémentée, l'étape suivante est l'étape 302. Une déconnexion suivie d'une reconnexion de l'appareil électrique au dispositif 101 permet alors de relancer le processus décrit dans la FIG. 3 à partir de l'étape 302.

Dans l'hypothèse où un message de validation, c'est-à-dire un message comprenant un paramètre indiquant que l'alimentation de l'appareil électrique doit être maintenue au delà de la première durée T0, est reçu, le dispositif 101 passe aux étapes 310 et 311. Il s'agit de la phase d'alimentation de l'appareil électrique dite « en mode validé », par opposition à la phase d'alimentation précédente où il n'y avait pas eu validation. Cette précédente phase à une durée maximale limitée à la première durée T0. De manière identique, la phase d'alimentation de l'appareil électrique en mode « validé », c'est-à-dire une fois qu'un message de validation a été reçu lors de l'étape 304, peut, selon le mode de réalisation, avoir une durée limitée à une troisième durée (dite « T1 » sur la FIG. 3 en étape 310).

De même, cette phase d'alimentation en mode « validé » s'achève lorsque l'appareil électrique connecté au connecteur 114 est déconnecté, ce qui correspond à l'étape 311.

L'étape 310, qui est optionnelle, est une vérification que la phase d'alimentation électrique « validée » n'a pas dépassée la troisième durée T1. Dans une optique de facturation du service fourni par le dispositif 101, par exemple d'une facturation selon la durée de la phase d'alimentation, cela permet de limiter le temps de charge maximal, et donc la somme maximale qui est facturée pour une charge. De même que la première durée T0, la troisième durée T1 peut être adaptée ou modifiée suivant les mêmes modalités.

Selon un mode de réalisation, une deuxième durée écoulée peut être mesurée soit à partir de la connexion de l'appareil électrique (étape 302) soit à partir de la réception du message de validation (étape 304). Dans le premier cas, cette deuxième durée écoulée est la même que la première durée écoulée utilisée précédemment lors de l'étape 305. Quelque soit le choix du point de départ de la deuxième durée écoulée, elle est comparée à la troisième durée T1. Si la deuxième durée écoulée est supérieure à la troisième durée T1, le dispositif passe à l'étape 312. Sinon le dispositif passe à l'étape 311.

L'étape 311 correspond à la détection de la déconnexion de l'appareil électrique précédemment connecté au dispositif 101. La détection de la déconnexion se fait avec une méthode similaire à celle de la détection de la connexion. S'il n'y a pas détection de la déconnexion de l'appareil électrique, le dispositif 101 exécute de nouveau l'étape 310.

Ainsi, tant qu'il n'y a pas détection d'une déconnexion de l'appareil électrique connecté et qu'il n'y a pas dépassement de la troisième durée T1, la phase d'alimentation électrique de l'appareil électrique connecté au dispositif 101 se poursuit.

Au contraire, après détection de la déconnexion de l'appareil ou dépassement de la troisième durée T1, le dispositif 101 passe à l'étape 312.

Durant l'étape 312, l'alimentation électrique de l'appareil électrique est coupée ou désactivée. Le module de commande 111 pilote par exemple l'ouverture de l'interrupteur 113.

Durant cette même étape 312, le dispositif 101 peut envoyer un message contenant au moins le paramètre mesuré. Avantageusement, l'envoi du message se fait vers un serveur de facturation, le message comprenant un paramètre mesuré. Ce paramètre mesuré est utilisé par le serveur de facturation pour la facturation du service d'alimentation fourni par le dispositif 101. Ce message peut comprendre en outre un identifiant associé au dispositif 101. Pour permettre une facturation du service à la durée d'utilisation, le paramètre mesuré est la durée de la phase d'alimentation de l'appareil électrique. Dans le cas où le message ne comprend pas de paramètre mesuré, le serveur de facturation peut calculer la durée écoulée entre l'envoi du message de validation, correspondant au message de validation reçu par le dispositif 101 et détecté lors de l'étape 304, et la réception du message envoyé par le dispositif 101 lors de l'étape 312 pour déterminer une durée de phase d'alimentation à facturer.

Suite à l'étape 312, le dispositif 101 peut, comme illustré dans la FIG. 3, subir une réinitialisation. Cette réinitialisation peut avoir pour effet une remise à zéro des paramètres du dispositif 101 ou un effacement des données stockées dans la zone de mémoire du dispositif 101. Alternativement, le dispositif 101 peut retourner à l'étape 302, en l'attente de la détection de la connexion d'un nouvel appareil électrique.

## Revendications

1. Dispositif (101) permettant l'alimentation électrique d'un appareil électrique (102), disposant d'un module de commande (111) à distance permettant l'activation de l'alimentation électrique de l'appareil électrique et permettant la réception de messages, le dispositif étant **caractérisé en ce qu'**il comprend des moyens pour :
- détecter (302) la connexion de l'appareil électrique, la détection de la connexion déclenchant une phase (303) d'alimentation électrique de l'appareil électrique pendant une première durée,
- à réception (304) d'un message pendant la première durée, maintenir l'alimentation électrique de l'appareil électrique au delà de la première durée.

2. Dispositif selon la revendication 1, comprenant une prise électrique femelle permettant la connexion par branchement de l'appareil électrique.

3. Dispositif selon la revendication 1, comprenant un système de transmission d'énergie sans fil permettant la connexion de l'appareil électrique par une technologie de transmission d'énergie sans fil.

4. Dispositif selon la revendication 1, le message reçu étant un message de validation comprenant un paramètre indiquant que l'alimentation de l'appareil électrique doit être maintenue au delà de la première durée.

5. Dispositif selon la revendication 1, dans lequel le module de commande à distance est en outre agencé pour permettre un envoi de messages, le dispositif comprenant des moyens pour :
- détecter la déconnexion de l'appareil électrique,
- mesurer au moins un paramètre lié à la phase d'alimentation de l'appareil électrique,
- envoyer un message contenant au moins le paramètre mesuré.

6. Dispositif selon la revendication 5, le paramètre mesuré étant la durée de la phase d'alimentation de l'appareil électrique.

7. Dispositif selon la revendication 1, comprenant un moyen pour, à défaut de la réception d'un message pendant la première durée, désactiver pendant une deuxième durée l'alimentation de l'appareil électrique ainsi que la détection de la connexion d'un appareil électrique.

8. Système comprenant un dispositif selon la revendication 1 et un serveur comprenant des moyens pour envoyer des messages au dispositif.

9. Système selon la revendication 8,
le dispositif permettant l'alimentation électrique d'un appareil électrique permettant la réception de messages en provenance du serveur et l'envoi de messages à destination du serveur,
et le serveur comprenant des moyens pour envoyer des messages au dispositif et recevoir des messages en provenance du dispositif.

10. Système selon la revendication 9, comprenant un appareil électrique :
pouvant être connecté au dispositif pour son alimentation électrique,
et disposant de moyens pour envoyer des messages à destination du serveur et recevoir des messages en provenance du serveur.

11. Système selon la revendication 10, les messages échangés entre l'appareil électrique et le serveur étant de type message court.

12. Procédé d'alimentation électrique d'un appareil électrique, le procédé étant exécuté par un dispositif permettant l'alimentation électrique d'un appareil électrique disposant d'un module de commande à distance, le procédé comprenant les étapes de :
- détection (302) de la connexion d'un appareil électrique,
- déclenchement (303) de l'alimentation de l'appareil électrique pendant une première durée,
- à réception (304) d'un message pendant la première durée, maintien de l'alimentation électrique de l'appareil électrique au delà de la première durée.

13. Programme d'ordinateur comportant des instructions de programme pour la mise en oeuvre des étapes du procédé selon la revendication 12 lorsque ce programme est exécuté par un processeur.

## Patentansprüche

1. Vorrichtung (101), welche die Stromversorgung eines elektrischen Gerätes (102) ermöglicht, welche über ein Fernsteuerungsmodul (111) verfügt, das die Aktivierung der Stromversorgung des elektrischen Gerätes ermöglicht und den Empfang von Nachrichten ermöglicht, wobei die Vorrichtung **dadurch gekennzeichnet ist, dass** sie Mittel umfasst, um:
- die Verbindung mit dem elektrischen Gerät zu erkennen (302), wobei die Erkennung der Verbindung eine Phase (303) der Stromversorgung des elektrischen Gerätes während einer ersten Dauer auslöst,
- bei Empfang (304) einer Nachricht während der ersten Dauer die Stromversorgung des elektrischen Gerätes über die erste Dauer hinaus aufrechtzuerhalten.

2. Vorrichtung nach Anspruch 1, welche eine elektrische Steckbuchse umfasst, welche die Verbindung durch Anschließen des elektrischen Gerätes ermöglicht.

3. Vorrichtung nach Anspruch 1, welche ein System zur drahtlosen Energieübertragung umfasst, das die Verbindung mit dem elektrischen Gerät durch eine Technologie der drahtlosen Energieübertragung ermöglicht.

4. Vorrichtung nach Anspruch 1, wobei die empfangene Nachricht eine Validierungsnachricht ist, die einen Parameter umfasst, der anzeigt, dass die Stromversorgung des elektrischen Gerätes über die erste Dauer hinaus aufrechterhalten werden soll.

5. Vorrichtung nach Anspruch 1, wobei das Fernsteuerungsmodul außerdem dafür ausgelegt ist, ein Senden von Nachrichten zu ermöglichen, wobei die Vorrichtung Mittel umfasst, um:
- die Trennung der Verbindung mit dem elektrischen Gerät zu erkennen,
- wenigstens einen Parameter zu messen, der mit der Phase der Stromversorgung des elektrischen Gerätes zusammenhängt,
- eine Nachricht zu senden, die wenigstens den gemessenen Parameter enthält.

6. Vorrichtung nach Anspruch 5, wobei der gemessene Parameter die Dauer der Phase der Stromversorgung des elektrischen Gerätes ist.

7. Vorrichtung nach Anspruch 1, welche ein Mittel umfasst, um, wenn während der ersten Dauer keine Nachricht empfangen wird, während einer zweiten Dauer die Stromversorgung des elektrischen Gerätes sowie die Erkennung der Verbindung mit einem elektrischen Gerät zu deaktivieren.

8. System, welches eine Vorrichtung nach Anspruch 1 und einen Server umfasst, welcher Mittel zum Senden von Nachrichten an die Vorrichtung umfasst.

9. System nach Anspruch 8,
wobei die Vorrichtung, welche die Stromversorgung eines elektrischen Gerätes ermöglicht, den Empfang von Nachrichten von dem Server und das Senden von Nachrichten an den Server ermöglicht,
und wobei der Server Mittel zum Senden von Nachrichten an die Vorrichtung und Empfangen von Nachrichten von der Vorrichtung umfasst.

10. System nach Anspruch 9, welches ein elektrisches Gerät umfasst:
das für seine Stromversorgung mit der Vorrichtung verbunden werden kann
und über Mittel zum Senden von Nachrichten an den Server und Empfangen von Nachrichten von dem Server verfügt.

11. System nach Anspruch 10, wobei die Nachrichten, die zwischen dem elektrischen Gerät und dem Server ausgetauscht werden, vom Typ von Kurznachrichten sind.

12. Verfahren zur Stromversorgung eines elektrischen Gerätes, wobei das Verfahren von einer Vorrichtung ausgeführt wird, welche die Stromversorgung eines elektrischen Gerätes ermöglicht, welche über ein Fernsteuerungsmodul verfügt, wobei das Verfahren die Schritte umfasst:
- Erkennung (302) der Verbindung mit einem elektrischen Gerät,
- Auslösung (303) der Stromversorgung des elektrischen Gerätes während einer ersten Dauer,
- bei Empfang (304) einer Nachricht während der ersten Dauer Aufrechterhaltung der Stromversorgung des elektrischen Gerätes über die erste Dauer hinaus.

13. Computerprogramm, welches Programmanweisungen zur Durchführung der Schritte des Verfahrens nach Anspruch 12, wenn dieses Programm von einem Prozessor ausgeführt wird, umfasst.

## Claims

1. Unit (101) allowing an electrical device (102) to be supplied with electrical power, having a remote-control module (111) allowing the supply of electrical power to the electrical device to be activated and allowing messages to be received, the unit being **characterized in that** it comprises means for:
- detecting (302) the connection of the electrical device, the detection of the connection triggering a phase (303) of supplying electrical power to the electrical device for a first duration;
- on receiving (304) a message in the first duration, maintaining the supply of electrical power to the electrical device beyond the first duration.

2. Unit according to Claim 1, comprising a female electrical socket allowing the electrical device to be connected by plugging in.

3. Unit according to Claim 1, comprising a wireless power transmission system allowing the electrical device to be connected via a wireless power transmission technology.

4. Unit according to Claim 1, the received message being a validation message comprising a parameter indicating that the supply of power to the electrical device must be maintained beyond the first duration.

5. Unit according to Claim 1, in which the remote-control module is further designed to allow messages to be sent, the unit comprising means for:
- detecting the disconnection of the electrical device;
- measuring at least one parameter linked to the phase of supplying power to the electrical device;
- sending a message containing at least the measured parameter.

6. Unit according to Claim 5, the measured parameter being the duration of the phase of supplying power to the electrical device.

7. Unit according to Claim 1, comprising a means for, on failing to receive a message in the first duration, deactivating, for a second duration, the supply of power to the electrical device as well as the detection of the connection of an electrical device.

8. System comprising a unit according to Claim 1 and a server comprising means for sending messages to the unit.

9. System according to Claim 8,
the unit allowing an electrical device to be supplied with electrical power allowing messages originating from the server to be received and messages destined for the server to be sent,
and the server comprising means for sending messages to the unit and receiving messages originating from the unit.

10. System according to Claim 9, comprising an electrical device:
that is able to be connected to the unit in order for electrical power to be supplied thereto;
and which has means for sending messages destined for the server and receiving messages originating from the server.

11. System according to Claim 10, the messages exchanged between the electrical device and the server being of short message type.

12. Method for supplying electrical power to an electrical device, the method being executed by a unit allowing an electrical device to be supplied with electrical power, which device has a remote-control module, the method comprising the steps of:
- detecting (302) the connection of an electrical device;
- triggering (303) the supply of power to the electrical device for a first duration;
- on receiving (304) a message in the first duration, maintaining the supply of electrical power to the electrical device beyond the first duration.

13. Computer program comprising program instructions for the implementation of the steps of the method according to Claim 12, when this program is executed by a processor.
